# EUROPEAN PATENT APPLICATION

(11) **EP 4 455 717 A1**
(43) Date of publication of application: **30.10.2024**
(21) Application number: 21968851.2
(22) Date of filing: 21.12.2021
(51) Int. Cl.: G01S 7/481

(54) **SENSOR DEVICE**

(71) Applicant: Pioneer Corporation, Tokyo 113-0021 (JP); Pioneer Smart Sensing Innovations Corporation, Tokyo 113-0021 (JP)
(72) Inventor: KASONO Osamu, Kawagoe-shi, Saitama 350-8555 (JP)
(74) Representative: Vossius & Partner Patentanwälte Rechtsanwälte mbB
(86) International application number: PCT/JP2021/047297
(87) International publication number: WO 2023/119414

(57) **Abstract**

A plurality of first patterns (202A) include a group of the first patterns (202A) positioned on the positive direction side in a first direction (X) with respect to a second center line (CY), and another group of the first patterns (202A) positioned on the negative direction side in the first direction (X) with respect to the second center line (CY). A plurality of second patterns (204A) include a group of second patterns (204A) positioned on the positive direction side in a second direction (Y) with respect to a first center line (CX), and another group of second patterns (204A) positioned on the negative direction side in the second direction (Y) with respect to the first center line (CX).

## Description

### TECHNICAL FIELD

The present invention relates to a sensor device.

### BACKGROUND ART

In recent years, various sensor devices such as light detection and ranging (LiDAR) have been developed. The sensor device includes a scanning unit. The scanning unit scans a predetermined scanning range by reflecting beams emitted from a light source such as a laser using a movable reflection body.

Patent Document 1 describes an example of the sensor device. A scanning range of the scanning unit may be shifted from a desired position due to predetermined factors such as a temperature. In the sensor device described in Patent Document 1, reflection bodies are provided at both ends of a scanning range in the horizontal direction in order to detect a shift in the horizontal direction from the desired position of the scanning range.

### RELATED DOCUMENT

### PATENT DOCUMENT

[Patent Document 1] Japanese Unexamined Patent Publication No. 2020-16481

### SUMMARY OF THE INVENTION

### TECHNICAL PROBLEM

In accordance with a drive state of a scanning unit, the swing of a movable reflection body may not follow an input signal due to a non-linearity of a drive system of the scanning unit. Therefore, for example, as described in Patent Document 1, it may be relatively difficult to distinguish the drive state of the scanning unit only by providing a reflection body at only one place on one side with respect to the center of the scanning range.

One example of problems to be solved by the present invention may be to make it easy to distinguish a drive state of a scanning unit.

### SOLUTION TO PROBLEM

The invention as described in Claim 1 is a sensor device including:
a scanning unit, and
a reflection body that reflects at least a portion of beams irradiated with which a scanning range of the scanning unit is irradiated, in which
at least a portion of the reflection body is positioned at a plurality of places shifted from each other in a predetermined direction on one side in the predetermined direction with respect to a center of the scanning range.

### BRIEF DESCRIPTION OF THE DRAWINGS

Fig. 1 is a perspective view of a sensor device according to Embodiment 1.
Fig. 2 is a view of a reflection body according to Embodiment 1, as viewed from a side opposite to the side in which a scanning unit is positioned.
Fig. 3 is a graph showing a signal of a swing angle around a first rotation axis of a movable reflection body in a first drive state and a second drive state in a case where reflection bodies are arranged at two predetermined places in the scanning range.
Fig. 4 is a graph showing a signal of a swing angle around a first rotation axis of a movable reflection body in a first drive state and a third drive state in a case where reflection bodies are arranged at two predetermined places in the scanning range.
Fig. 5 is a graph showing a signal of a swing angle around a first rotation axis of a movable reflection body in a first drive state and a second drive state in a case where a reflection body is arranged at one predetermined place in the scanning range.
Fig. 6 is a graph showing a signal of a swing angle around a first rotation axis of a movable reflection body in a first drive state and a third drive state in a case where a reflection body is arranged at one predetermined place in the scanning range.
Fig. 7 is a view of a reflection body according to Embodiment 2, as viewed from a side opposite to the side in which a scanning unit is positioned.
Fig. 8 is a view of a reflection body according to Embodiment 3, as viewed from a side opposite to the side in which a scanning unit is positioned.
Fig. 9 is a view of a reflection body according to Embodiment 4, as viewed from a side opposite to the side in which a scanning unit is positioned.

### DESCRIPTION OF EMBODIMENTS

Hereinafter, embodiments of the present invention will be described with reference to the drawings. In all drawings, the same constituent components are denoted by the same reference signs, and detailed explanation thereof will not be repeated.

In the present specification, ordinal numbers, such as "first", "second", and "third", are attached only for distinguishing components to which the same names are attached unless otherwise specified, and do not mean particular features (for example, an order or a degree of importance) of the components.

### (Embodiment 1)

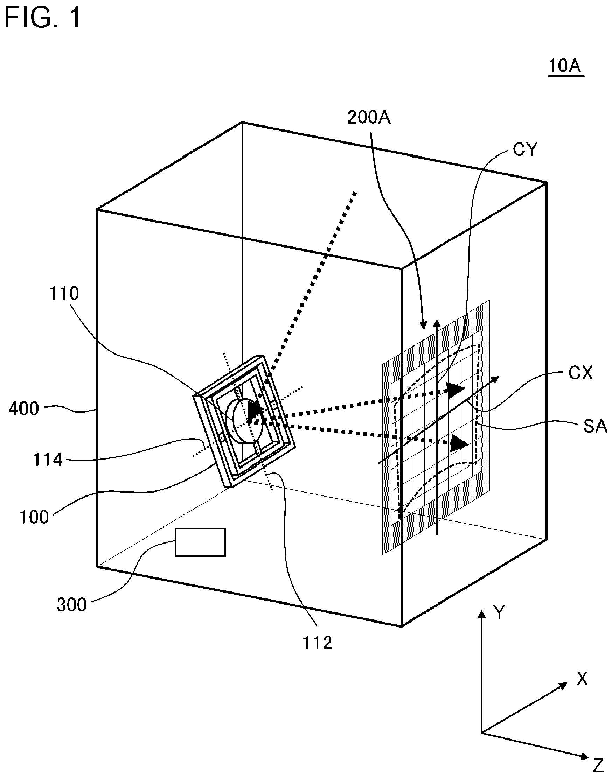

Fig. 1 is a perspective view of a sensor device 10A according to Embodiment 1.

In Fig. 1, an arrow indicating a first direction X, a second direction Y, or a third direction Z indicates that a direction from a proximal end to a distal end of the arrow is a positive direction in the direction indicated by the arrow, and the direction from the distal end to the proximal end of the arrow is a negative direction in the direction indicated by the arrow.

The first direction X is one direction parallel to the horizontal direction. As viewed from the positive direction in the third direction Z, the positive direction in the first direction X is a direction from left to right in the horizontal direction, and the negative direction in the first direction X is a direction from right to left in the horizontal direction. The second direction Y is a direction parallel to the vertical direction. The positive direction in the second direction Y is a direction from the bottom to the top in the vertical direction, and the negative direction in the second direction Y is a direction from the top to the bottom in the vertical direction. The third direction Z is one direction parallel to the horizontal direction and orthogonal to the first direction X. The positive direction in the third direction Z is a direction from a side where the scanning unit 100 described later is positioned toward a side where the reflection body 200A described later is positioned. The negative direction in the third direction Z is a direction from the side where the reflection body 200A is positioned toward the side where the scanning unit 100 is positioned.

The relationship among the first direction X, the second direction Y, the third direction Z, the horizontal direction, and the vertical direction is not limited to the relationship according to the present embodiment. The relationship among the first direction X, the second direction Y, the third direction Z, the horizontal direction, and the vertical direction differs in accordance with the disposition of the sensor device 10A. For example, the third direction Z may be parallel to the vertical direction.

The sensor device 10A includes the scanning unit 100, the reflection body 200A, a computer 300, and a casing 400.

The scanning unit 100 is housed inside the casing 400. In the present embodiment, the scanning unit 100 is a twin-axis micro-electromechanical system (MEMS) mirror. It should be noted that the scanning unit 100 may be a scanning unit other than the twin-axis MEMS mirror. For example, the scanning unit 100 may be a galvano mirror, a polygon mirror, or the like. The scanning unit 100 has a movable reflection body 110. The movable reflection body 110 reflects beams emitted from a light source such as a laser which is not shown in the drawing. The dashed line arrow extending toward the movable reflection body 110 in Fig. 1 indicates an optical axis of beams emitted from the light source which is not shown in the drawing, and incident on the movable reflection body 110. Each of two dashed line arrows extending from the movable reflection body 110 in Fig. 1 indicates an optical axis of a beam reflected by the movable reflection body 110. The two beams indicated by the two dashed line arrows are reflected by the movable reflection body 110 at timings different from each other.

The scanning unit 100 scans the predetermined scanning range SA projected onto the virtual surface perpendicular to the third direction Z with beams. In the example shown in Fig. 1, the scanning range SA has a shape similar to a fan shape, as viewed from the third direction Z. The movable reflection body 110 swings around a predetermined first rotation axis 112 at a resonance frequency of the movable reflection body 110. Thus, the scanning unit 100 performs the scanning of the scanning range SA in the horizontal direction. In addition, the movable reflection body 110 swings around a second rotation axis 114 orthogonal to the first rotation axis 112 at a frequency having a basic frequency that is lower than a resonance frequency of the movable reflection body 110. Thus, the scanning unit 100 performs the scanning of the scanning range SA in the vertical direction. The scanning range SA projected onto a virtual surface perpendicular to the third direction Z in a transmissive base material such as a window provided in the casing 400 is shown in Fig. 1. The transmissive base material transmits the beams reflected by the movable reflection body 110.

Furthermore, a first center line CX and a second center line CY are attached to the scanning range SA shown in Fig. 1 for the sake of description. The first center line CX passes through the center of the scanning range SA in the second direction Y in parallel with the first direction X. The second center line CY passes through the center of the scanning range SA in the first direction X in parallel with the second direction Y.

An object, which is not shown in the drawing, present outside the casing 400 is irradiated with the beams irradiated by the scanning unit 100 toward the scanning range SA. In a case in which the beams are reflected or scattered by the object, a light-receiving element such as an avalanche photodiode (APD), which is not shown in the drawing, housed inside the casing 400 is irradiated with the reflected light or scattered light of the beams. The computer 300 generates point cloud data using signals generated from the light-receiving element.

In the example shown in Fig. 1, the computer 300 is housed in the casing 400. The computer 300 is, for example, a microcomputer. The computer 300 shown in Fig. 1 is schematically shown. Therefore, the computer 300 shown in Fig. 1 does not suggest an actual position or size of the computer 300. In addition, the computer 300 may be provided outside the casing 400.

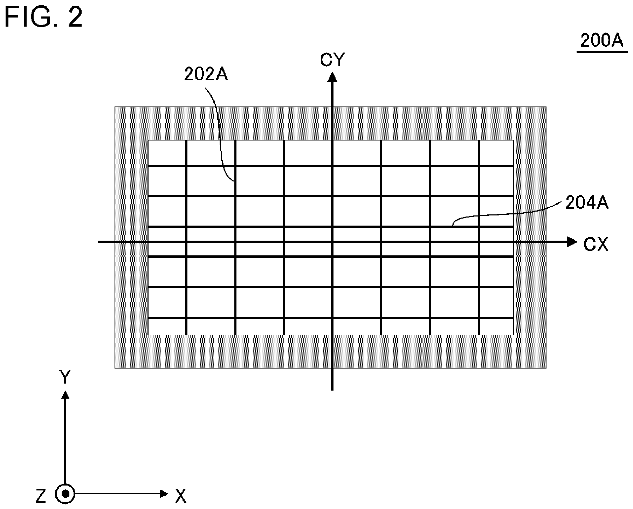

Fig. 2 is a view of a reflection body 200A according to Embodiment 1, as viewed from a side opposite to the side where the scanning unit 100 is positioned. In Fig. 2, a first center line CX and a second center line CY are attached in the same manner as in Fig. 1 for the sake of description.

In Fig. 2, a black-dotted white circle indicating the third direction Z indicates that a direction from the background to the foreground of the paper plane is a positive direction in the direction indicated by the black-dotted white circle, and that a direction from the foreground to the background of a paper plane is a negative direction in the direction indicated by the black-dotted white circle.

In Embodiment 1, the reflection body 200A is provided on a translucent base material such as a window provided in the casing 400. In this case, the reflection body 200A can be provided on the translucent base material by patterning. Therefore, the reflection body 200A can be easily installed, as compared with a case where the reflection body 200A is provided in a predetermined space without being provided on a translucent base material. It should be noted that a method for installing the reflection body 200A is not limited to this example. For example, the reflection body 200A may be provided in a predetermined space without being provided on a translucent base material.

In addition, the reflection body 200A may be a heating element such as an electric heating wire. For example, considering that the sensor device 10A is installed in an outdoor area under strict meteorological conditions, the reflection body 200A may be a defogger. In this example, the reflection body 200A can be used not only for distinguishing a drive state of the scanning unit 100 but also for prevention of dew or freezing of a window unit of the casing 400.

The reflection body 200A according to Embodiment 1 is arranged in a substantially rectangular lattice frame shape, as viewed in the third direction Z. Specifically, the reflection body 200A has a plurality of first patterns 202A and a plurality of second patterns 204A.

The plurality of first patterns 202A are arranged at substantially equal intervals in the first direction X, as viewed in the third direction Z. Each of the first patterns 202A extends substantially parallel to the second direction Y. The plurality of first patterns 202A include a group of the first patterns 202A positioned on the positive direction side in the first direction X with respect to the second center line CY, and another group of the first patterns 202A positioned on the negative direction side in the first direction X with respect to the second center line CY. It should be noted that a state of being at substantially equal intervals means not only a state of being at geometrically strict equal intervals, but also a state of deviating from the state of being at geometrically strict equal intervals due to factors such as a tolerance. In addition, a state of being substantially parallel means not only a state of being geometrically strict parallel but also a state of deviating from the state of being geometrically strict parallel due to factors such as tolerance.

The plurality of second patterns 204A are arranged at substantially equal intervals in the second direction Y, as viewed in the third direction Z. Each of the second patterns 204A extends substantially parallel to the first direction X. A plurality of second patterns 204A include a group of the second patterns 204A positioned on the positive direction side in the second direction Y with respect to the first center line CX, and another group of the second patterns 204A positioned on the negative direction side in the second direction Y with respect to the first center line CX.

The plurality of second patterns 204A are orthogonal to the plurality of first patterns 202A. A pitch of the plurality of second patterns 204A in the second direction Y is shorter than a pitch of the plurality of first patterns 202A in the first direction X. Accordingly, a lattice formed by the plurality of first patterns 202A and the plurality of second patterns 204A has an approximately rectangular shape having a pair of long sides parallel to the first direction X and a pair of short sides parallel to the second direction Y.

The shape of the reflection body 200A according to Embodiment 1 is not limited to the shape shown in Fig. 2.

For example, one of a group of the first patterns 202A positioned on the positive direction side in the first direction X with respect to the second center line CY, and another group of the first patterns 202A positioned on the negative direction side in the first direction X with respect to the second center line CY does not need to be provided. A distance in the first direction X between the first patterns 202A adjacent to each other in the first direction X may differ in accordance with the position of the scanning range SA in the first direction X. At least one of the plurality of first patterns 202A may be inclined with respect to the second direction Y.

In addition, one of a group of the second patterns 204A positioned on the positive direction side in the second direction Y with respect to the first center line CX, and another group of the second patterns 204A positioned on the negative direction side in the second direction Y with respect to the first center line CX does not need to be provided. A distance in the second direction Y between the second patterns 204A adjacent to each other in the second direction Y may differ in accordance with the position of the scanning range SA in the second direction Y. At least one of the plurality of second patterns 204A may be inclined with respect to the first direction X.

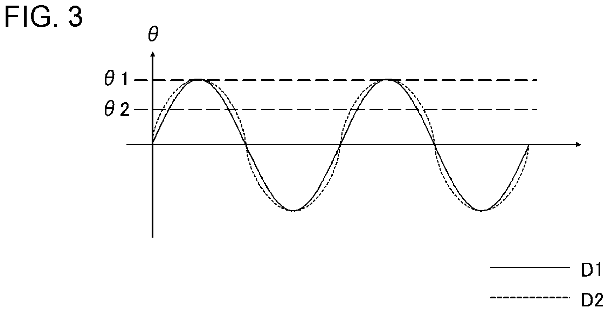

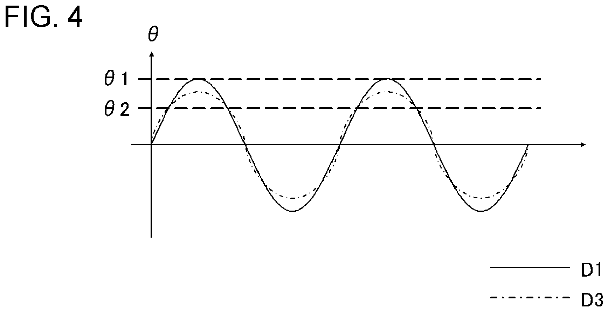

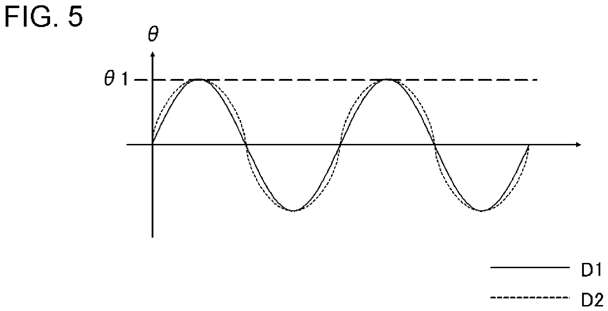

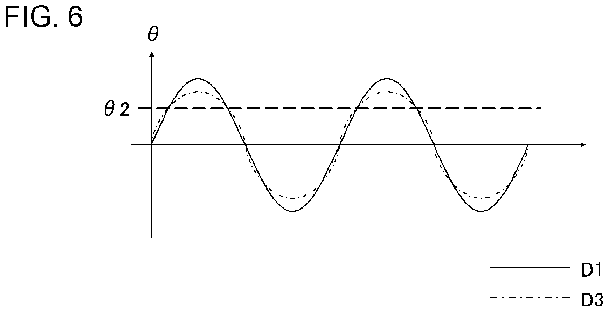

Fig. 3 is a graph showing a signal of a swing angle θ around a first rotation axis 112 of a movable reflection body 110 in a first drive state D1 and a second drive state D2 in a case where a reflection body 200A is arranged at two predetermined places in the scanning range SA. Fig. 4 is a graph showing a signal of the swing angle θ around the first rotation axis 112 of the movable reflection body 110 in the first drive state D1 and a third drive state D3 in a case where the reflection bodies 200A are arranged at two predetermined places in the scanning range SA. Fig. 5 is a graph showing a signal of the swing angle θ around the first rotation axis 112 of the movable reflection body 110 in the first drive state D1 and the second drive state D2 in a case where the reflection body 200A is arranged at one predetermined place in the scanning range SA. Fig. 6 is a graph showing a signal of a swing angle θ around the first rotation axis 112 of the movable reflection body 110 in the first drive state D1 and the third drive state D3 in a case where the reflection body 200A is arranged at one predetermined place in the scanning range SA.

The horizontal axis of the graphs shown in Figs. 3 to 6 indicates time. The arrow indicating the time indicates that the time elapses from the left proximal end of the arrow to the right distal end of the arrow.

A vertical axis of the graphs shown in Figs. 3 to 6 indicates a swing angle θ around the first rotation axis 112 of the movable reflection body 110. The arrow indicating the swing angle θ indicates that the swing angle θ increases from the proximal end on the lower side of the arrow toward the distal end on the upper side of the arrow. The swing angle θ is 0 on the horizontal axis indicating time.

In Figs. 3 to 6, the waveform indicated by the solid line indicates the signal at the swing angle θ in the first drive state D1. In Figs. 3 and 5, the waveform indicated by the dashed line indicates the signal at the swing angle θ in the second drive state D2. In Figs. 4 and 6, the waveform indicated by the alternate long and short dash lines indicates the signal at the swing angle θ in the third drive state D3.

In a case where beams are reflected by the movable reflection body 110 in a case where the swing angle θ is 0, any portion of the second center line CY is irradiated with the beams. In a case where the beams are reflected by the movable reflection body 110 at a time at which the swing angle θ is positive, the beams are irradiated onto the positive direction side in the first direction X with respect to the second center line CY. In a case where the beams are reflected by the movable reflection body 110 at a time at which the swing angle θ is negative, the beams are irradiated onto the negative direction side in the first direction X with respect to the second center line CY.

In the graphs shown in Figs. 3 to 6, the signal indicating the swing angle θ of the first drive state D1 varies periodically. In addition, as time elapses, the swing angle of the movable reflection body 110 around the second rotation axis 114 also changes. Therefore, as time elapses, a position in the second direction Y where the beams are irradiated by the scanning unit 100 is displaced from the positive direction to the negative direction in the second direction Y, or from the negative direction to the positive direction in the second direction Y. Therefore, the position in the second direction Y where the beams are irradiated by the scanning unit 100 differs in accordance with a period of the signal of the swing angle θ.

In the graphs shown in Figs. 3 and 5, the signal indicating the swing angle θ of the second drive state D2 varies periodically. The period and the amplitude of the signal indicating the swing angle θ of the second drive state D2 are equal to the period and the amplitude of the signal indicating the swing angle θ of the first drive state D1, respectively. The waveform of the signal indicating the swing angle θ of the second drive state D2 is different from the waveform of the signal indicating the swing angle θ of the first drive state D1. Specifically, the absolute value of the signal indicating the swing angle θ of the second drive state D2 is larger than the absolute value of the signal indicating the swing angle θ of the first drive state D1, except for 0, a minimum value, and a maximum value of the signal of the swing angle θ.

In the graphs shown in Figs. 4 and 6, the signal indicating the swing angle θ of the third drive state D3 varies periodically. The period of the signal indicating the swing angle θ of the third drive state D3 is equal to the period of the signal indicating the swing angle θ of the first drive state D1. The amplitude of the signal indicating the swing angle θ of the third drive state D3 is smaller than the amplitude of the signal indicating the swing angle θ of the first drive state D1. In addition, in a case of |θ| < Θ2, the absolute value of the signal indicating the third drive state D3 is larger than the absolute value of the signal indicating the first drive state D1. In |θ| = Θ2, the signal indicating the third drive state D3 is equal to the signal indicating the first drive state D1. In |θ| > θ2, the absolute value of the signal indicating the third drive state D3 is smaller than the absolute value of the signal indicating the first drive state D1.

The first swing angle Θ1 attached to the vertical axis of the graphs shown in Figs. 3, 4, and 5 indicates that the reflection body 200A is positioned at a position where the beams reflected by the movable reflection body 110 at the time of the swing angle θ being the first swing angle Θ1. Hereinafter, as necessary, the reflection body 200A provided at a position where the beams reflected by the movable reflection body 110 are irradiated at the time of the swing angle θ being the first swing angle Θ1 is referred to as a reflection body 200A of the first swing angle Θ1.

In Figs. 3, 4, and 5, the first swing angle Θ1 is equal to the maximum value of the signal indicating the swing in the first drive state D1 and the second drive state D2. Therefore, the reflection body 200A with the first swing angle Θ1 is positioned at an end part in the positive direction in the first direction X of the scanning range SA in the first drive state D1 and the second drive state D2.

The second swing angle Θ2 attached to the vertical axis of the graphs shown in Figs. 3, 4, and 6 indicates that the reflection body 200A is positioned at a position where the beams reflected by the movable reflection body 110 at the time of the swing angle θ being the second swing angle Θ2. Hereinafter, as necessary, the reflection body provided at a position where the beams reflected by the movable reflection body 110 are irradiated at the time of the swing angle θ being the second swing angle Θ2 is referred to as a reflection body 200A of the second swing angle Θ2.

In Figs. 3, 4, and 6, the second swing angle Θ2 is larger than 0 and smaller than the first swing angle Θ1. Therefore, the reflection body 200A of the second swing angle Θ2 is positioned between the second center line CY in the first drive state D1 and an end part of the scanning range SA in the positive direction in the first direction X.

The graph shown in Fig. 3 and the graph shown in Fig. 5 are compared with each other.

In the graph shown in Fig. 5, the time at which the beams are reflected by the reflection body 200A with the first swing angle Θ1 in the second drive state D2 is the same as the time at which the beams are reflected by the reflection body 200A with the first swing angle Θ1 in the first drive state D1. Therefore, as shown in Fig. 5, in a case where the reflection body 200A with the second swing angle Θ2 is not provided, it is relatively difficult to distinguish the first drive state D1 from the second drive state D2.

On the contrary, in the graph shown in Fig. 3, the time at which the beams are reflected by the reflection body 200A with the second swing angle Θ2 in a time period in which the signal indicating the swing angle θ of the second drive state D2 increases from 0 to the maximum value is earlier that the time at which the beams are reflected by the reflection body 200A of the second swing angle Θ2 in a time period in which the signal indicating the swing angle θ of the first drive state D1 increases from 0 to the maximum value. In addition, the time at which the beams are reflected by the reflection body 200A with the second swing angle Θ2 in the time period in which the signal indicating the swing angle θ of the second drive state D2 decreases from the maximum value to 0 is later that the time at which the beams are reflected by the reflection body 200A of the second swing angle Θ2 in the time period in which the signal indicating the swing angle θ of the first drive state D1 decreases from the maximum value to 0. Therefore, as shown in Fig. 3, in a case where not only the reflection body 200A with the first swing angle Θ1 but also the reflection body 200A with the second swing angle Θ2 are also provided, it is relatively easier to distinguish the first drive state D1 from the second drive state D2.

Hereinafter, in the description of Figs. 3 and 5, the time at which the beams are reflected by the reflection body 200A with the second swing angle Θ2 in the time period in which the signal indicating the swing angle θ of the second drive state D2 increases from 0 to the maximum value is referred to as a reflection time of the second swing angle Θ2 in the increasing time period of the swing angle θ. In addition, in the description of Figs. 3 and 5, the time at which the beams are reflected by the reflection body 200A with the second swing angle Θ2 in the time period in which the signal indicating the swing angle θ of the second drive state D2 decreases from the maximum value to 0 is referred to as a reflection time of the second swing angle Θ2 in the decreasing time period of the swing angle θ.

As described with reference to Figs. 3 and 5, the computer 300 can determine a drive state of the movable reflection body 110 with reference to at least one of the reflection time of the second swing angle Θ2 in the increasing time period of the swing angle θ and the reflection time of the second swing angle Θ2 in the decreasing time period of the swing angle θ.

For example, a case where the reflection time of the second swing angle Θ2 in the increasing time period of the swing angle θ is a predetermined time in a predetermined drive state is considered. In this example, in a case where the reflection time of the second swing angle Θ2 in the increasing time period of the swing angle θ is shorter than the predetermined time, the computer 300 can determine that the absolute value of the signal indicating the swing angle θ is larger than the absolute value of the signal indicating the swing angle θ in the predetermined drive state, except for 0, a minimum value, and a maximum value of the swing angle θ. In addition, in a case where the reflection time of the second swing angle Θ2 in the increasing time period of the swing angle θ is longer than the predetermined time, the computer 300 can determine that the absolute value of the signal indicating the swing angle θ is smaller than the absolute value of the signal indicating the swing angle θ in the predetermined drive state, except for 0, a minimum value, and a maximum value of the swing angle θ.

In addition, for example, a case where the reflection time of the second swing angle Θ2 in the decreasing time period of the swing angle θ is a predetermined time in a predetermined drive state is considered. In this example, in a case where the reflection time of the second swing angle Θ2 in the decreasing time period of the swing angle θ is longer than the predetermined time, the computer 300 can determine that the absolute value of the signal indicating the swing angle θ is larger than the absolute value of the signal indicating the swing angle θ in the predetermined drive state, except for 0, a minimum value, and a maximum value of the swing angle θ. In addition, in a case where the reflection time of the second swing angle Θ2 in the decreasing time period of the swing angle θ is shorter than the predetermined time, the computer 300 can determine that the absolute value of the signal indicating the swing angle θ is smaller than the absolute value of the signal indicating the swing angle θ in the predetermined drive state, except for 0, a minimum value, and a maximum value of the swing angle θ.

As shown in Fig. 2, in an embodiment, each of the first patterns 202A extends along the second direction Y. Accordingly, the computer 300 can distinguish the first drive state D1 from the second drive state D2 by the method described with reference to Figs. 3 and 5 in a range where each of the first patterns 202A extends in the second direction Y. Therefore, for example, the computer 300 can distinguish the first drive state D1 from the second drive state D2 by applying the method described with reference to Figs. 3 and 5 over a wide range in the second direction Y, as compared with a case where the first patterns 202A are present only in a portion of the scanning range SA in the second direction Y, such as an end of the scanning range SA in the positive direction or the negative direction in the second direction Y. Therefore, in an embodiment, even though the drive state of the swing of the movable reflection body 110 around the first rotation axis 112 differs in accordance with the position in the second direction Y in the scanning range SA, the computer 300 can distinguish the drive state of the swing of the movable reflection body 110 around the first rotation axis 112 at each of a plurality of positions different from each other in the second direction Y of the scanning range SA.

The graph shown in Fig. 4 and the graph shown in Fig. 6 will be compared with each other.

In the graph shown in Fig. 6, the time at which the beams are reflected by the reflection body 200A with the second swing angle Θ2 in the third drive state D3 is the same as the time at which the beams are reflected by the reflection body 200A with the second swing angle Θ2 in the first drive state D1. Therefore, as shown in Fig. 6, in a case where the reflection body 200A with the first swing angle Θ1 is not provided, it is relatively difficult to distinguish the first drive state D1 from the third drive state D3.

On the contrary, in the graph shown in Fig. 4, in a time period in which the signal indicating the swing angle θ of the third drive state D3 goes from 0 to the maximum value and returns to 0, the beams are not reflected by the reflection body 200A of the first swing angle Θ1. On the other hand, in the graph shown in Fig. 4, in the time period in which the signal indicating the swing angle θ of the first drive state D1 goes from 0 to the maximum value and returns to 0, the beams are reflected by the reflection body 200A of the first swing angle θ1. Therefore, as shown in Fig. 4, in a case where not only the reflection body 200A with the second swing angle Θ2 but also the reflection body 200A with the first swing angle Θ1 are also provided, it is relatively easier to distinguish the first drive state D1 from the third drive state D3.

As described with reference to Figs. 4 and 6, the computer 300 can determine a drive state of the movable reflection body 110 in accordance with the number of times the beams are reflected by the reflection body 200A with the first swing angle Θ1 in the time period in which the signal indicating the swing angle θ goes from 0 to the maximum value and returns to 0. For example, a case where the beams are reflected once by the reflection body 200A in the time period in which the signal indicating the swing angle θ goes from 0 to the maximum value and returns to 0 in a predetermined drive state is considered. In this example, in a case where the beams are not reflected by the reflection body 200A in the time period in which the signal indicating the swing angle θ goes from 0 to the maximum value and returns to 0, the computer 300 can determine that the amplitude of the signal indicating the swing angle θ is smaller than the amplitude of the signal indicating the swing angle θ in a predetermined drive state. In addition, in a case where the beams are reflected twice by the reflection body 200A in the time period in which the signal indicating the swing angle θ goes from 0 to the maximum value and returns to 0, the computer 300 can determine that the amplitude of the signal indicating the swing angle θ is larger than the amplitude of the signal indicating the swing angle θ in a predetermined drive state.

As shown in Fig. 2, in an embodiment, each of the first patterns 202A extends along the second direction Y. Accordingly, the computer 300 can distinguish the first drive state D1 from the third drive state D3 by the method described with reference to Figs. 4 and 6 in a range where each of the first patterns 202A extends in the second direction Y, in the same manner as in the distinguishing method described with reference to Figs. 3 and 5.

Furthermore, in the examples shown in Figs. 3 and 4, the reflection bodies 200A are provided at two places on the positive direction side in the first direction X with respect to the second center line CY. However, the reflection body 200A may be provided at three or more places on the positive direction side in the first direction X with respect to the second center line CY. In addition, in a case where the reflection bodies 200A may be not only provided at a plurality of places on the positive direction side in the first direction X with respect to the second center line CY, but also the reflection bodies 200A may be provided at a plurality of places on the negative direction side in the first direction X with respect to the second center line CY. In addition, the reflection body 200A may be not provided on the positive direction side in the first direction X with respect to the second center line CY, but the reflection bodies 200A may be provided at a plurality of places on the negative direction side in the first direction X with respect to the second center line CY.

In addition, in Figs. 3 to 6, a description was made on distinguishing the drive state of the swing of the movable reflection body 110 around the first rotation axis 112. However, the matters described in Figs. 3 to 6 can be similarly applied to distinguishing the drive state of the swing of the movable reflection body 110 around the second rotation axis 114.

As described with reference to Figs. 3 to 6, at least a portion of the reflection body 200A can be positioned at a plurality of places shifted from each other in a predetermined direction on one side of a predetermined direction with respect to the center of the scanning range SA. For example, in the example shown in Fig. 2, a plurality of first patterns 202A are provided on one side in the first direction X with respect to the second center line CY. In this case, the drive state of the movable reflection body 110 swinging around the first rotation axis 112 can be easily distinguished, as compared with a case where the reflection body 200A is provided at only one place on one side of the first direction X with respect to the second center line CY.

In addition, at least a portion of the reflection body 200A may extend in a direction different from the predetermined direction. For example, in the example shown in Fig. 2, a plurality of first patterns 202A extend along the second direction Y. In this case, the drive state of the swing of the movable reflection body 110 around the first rotation axis 112 can be distinguished by applying a distinguishing method such as the method described with reference to Figs. 3 and 5, or the method described with reference to Figs. 4 and 6 over a wide range in the second direction Y of the scanning range SA, as compared with a case where each of the first patterns 202A is present only in a portion of the second direction Y, such as an end of the scanning range SA in the positive direction or the negative direction in the second direction Y.

In addition, as described with reference to Figs. 3 to 6, at least another portion of the reflection body 200A may be positioned at a plurality of places shifted from each other in the predetermined direction on one side of a direction different from the predetermined direction with respect to the center of the scanning range SA. For example, in the example shown in Fig. 2, a plurality of second patterns 204A are provided on one side in the second direction Y with respect to the first center line CX. In this case, a drive state of the movable reflection body 110 swinging around the second rotation axis 114 can be easily distinguished, as compared with a case where the reflection body 200A is provided at only one place on one side of the second direction Y with respect to the first center line CX.

In addition, at least a portion of the reflection body 200A may extend in the predetermined direction. For example, in the example shown in Fig. 2, a plurality of second patterns 204A extend along the first direction X. In this case, the drive state of the swing of the movable reflection body 110 around the second rotation axis 114 can be distinguished by applying a distinguishing method such as the method described with reference to Figs. 3 and 5, or the method described with reference to Figs. 4 and 6 over a wide range in the first direction X of the scanning range SA, as compared with a case where each of the second patterns 204A is present only in a portion of the first direction X, such as an end of the scanning range SA in the positive direction or the negative direction in the first direction X.

### (Embodiment 2)

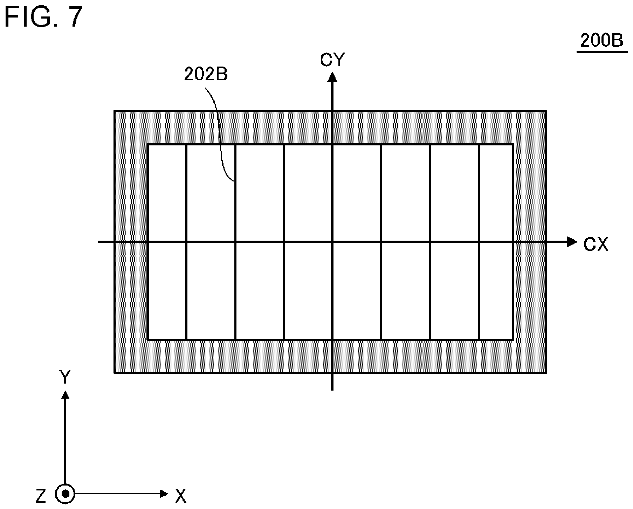

Fig. 7 is a view of a reflection body 200B according to Embodiment 2, as viewed from a side opposite to the side where the scanning unit 100 is positioned. The reflection body 200B according to Embodiment 2 is the same as the reflection body 200A according to Embodiment 1, except for the following points.

The reflection body 200B according to Embodiment 2 is arranged in a stripe shape. Specifically, the reflection body 200B has a plurality of first patterns 202B. The plurality of first patterns 202B are arranged substantially parallel to the first direction X at substantially equal intervals. Each of the first patterns 202B extends substantially parallel to the second direction Y.

The shape of the reflection body 200B according to Embodiment 2 is not limited to the shape shown in Fig. 7. For example, one of a group of the first patterns 202B positioned on the positive direction side in a first direction X with respect to a second center line CY, and another group of the first patterns 202B positioned on the negative direction side in the first direction X with respect to the second center line CY does not need to be provided. A distance in the first direction X between the first patterns 202B adjacent to each other in the first direction X may differ in accordance with the position of the scanning range SA in the first direction X. At least one of the plurality of first patterns 202B may be inclined with respect to the second direction Y.

Also in Embodiment 2, the drive state of the movable reflection body 110 swinging around the first rotation axis 112 can be easily distinguished, as compared with a case where the reflection body 200B is provided at only one place on one side of the first direction X with respect to the second center line CY, in the same manner as in Embodiment 1. In addition, also in Embodiment 2, the drive state of the swing of the movable reflection body 110 around the first rotation axis 112 can be distinguished over a wide range in the second direction Y of the scanning range SA, as compared with a case where the first patterns 202B are present only in a portion of the second direction Y of the scanning range SA, in the same manner as in Embodiment 1.

### (Embodiment 3)

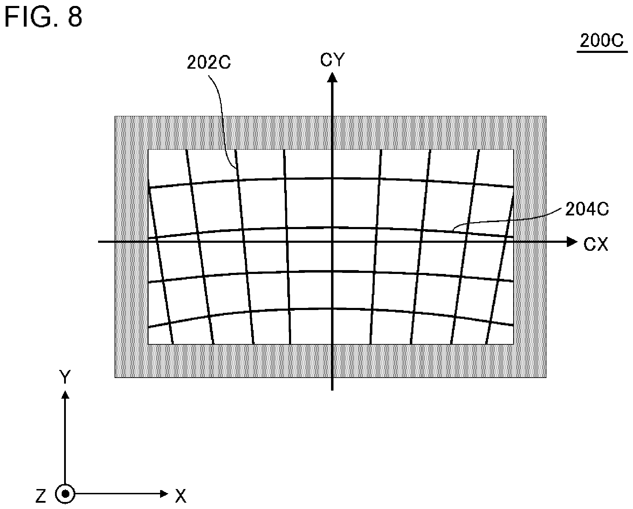

Fig. 8 is a view of a reflection body 200C according to Embodiment 3, as viewed from a side opposite to the side where the scanning unit 100 is positioned. The reflection body 200C according to Embodiment 3 is the same as the reflection body 200A according to Embodiment 1, except for the following points.

The reflection body 200C according to Embodiment 3 extends in a lattice frame shape deformed from a rectangular shape. Specifically, the reflection body 200C has a plurality of first patterns 202C and a plurality of second patterns 204C.

The first patterns 202C positioned at the second center line CY are substantially parallel to the second direction Y, as viewed in the third direction Z. On the contrary, the first patterns 202C shifted in the first direction X with respect to the second center line CY are separated away from the second center line CY as moving from the negative direction to the positive direction in the second direction Y.

The plurality of second patterns 204C according to Embodiment 3 are arranged in the second direction Y and intersect the plurality of first patterns 202C, as viewed in the third direction Z. Each of the second patterns 204C is convexly curved toward the upper side.

In Embodiment 3, due to the above-described layout of the plurality of first patterns 202C, the plurality of first patterns 202C can be arranged to be substantially at equal intervals with respect to the swing angle around the first rotation axis 112 of the movable reflection body 110. In addition, due to the above-described layout of the plurality of second patterns 204C, the plurality of second patterns 204C can be arranged to be substantially at equal intervals with respect to the swing angle around the second rotation axis 114 of the movable reflection body 110.

The shape of the reflection body 200C according to Embodiment 3 is not limited to the shape shown in Fig. 8. For example, one of a group of the first patterns 202C positioned on the positive direction side in a first direction X with respect to a second center line CY, and another group of the first patterns 202C positioned on the negative direction side in the first direction X with respect to the second center line CY does not need to be provided. In addition, one of a group of the second patterns 204C positioned on the positive direction side in a second direction Y with respect to a first center line CX, and another group of the second patterns 204C positioned on the negative direction side in the second direction Y with respect to the first center line CX does not need to be provided.

Also in Embodiment 3, the drive state of the movable reflection body 110 swinging around the first rotation axis 112 can be easily distinguished, as compared with a case where the reflection body 200C is provided at only one place on one side of the first direction X with respect to the second center line CY, in the same manner as in Embodiment 1. Further, the drive state of the movable reflection body 110 swinging around the second rotation axis 114 can be easily distinguished, as compared with a case where the reflection body 200C is provided at only one place on one side of the second direction Y with respect to the first center line CX.

In addition, also in Embodiment 3, the drive state of the swing of the movable reflection body 110 around the first rotation axis 112 can be distinguished over a wide range in the second direction Y of the scanning range SA, as compared with a case where the first patterns 202C are present only in a portion of the second direction Y of the scanning range SA, in the same manner as in Embodiment 1. Further, the drive state of the swing of the movable reflection body 110 around the second rotation axis 114 can be distinguished over a wide range in the first direction X of the scanning range SA, as compared to a case where the second patterns 204C are present only in a portion of the first direction X of the scanning range SA.

### (Embodiment 4)

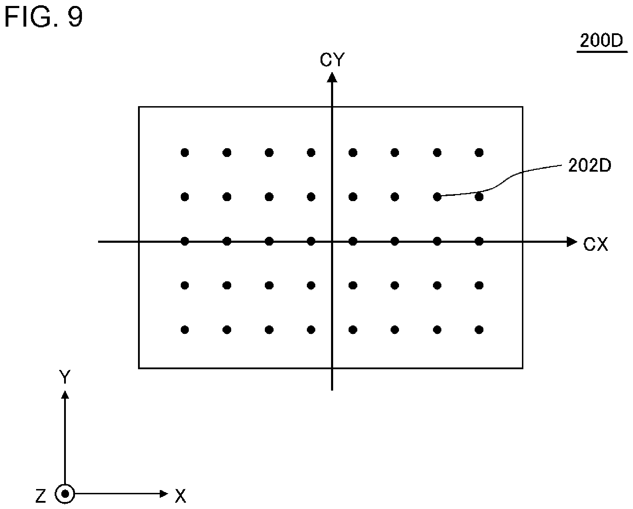

Fig. 9 is a view of a reflection body 200D according to Embodiment 4, as viewed from a side opposite to the side where the scanning unit 100 is positioned. The reflection body 200D according to Embodiment 4 is the same as the reflection body 200A according to Embodiment 1, except for the following points.

The reflection body 200D according to Embodiment 4 has a plurality of patterns 202D arranged in a regular lattice shape. The plurality of patterns 202D include a group of the patterns 202D positioned on the positive direction side in a first direction X with respect to a second center line CY, and another group of the first 202D positioned on the negative direction side in the first direction X with respect to the second center line CY. The patterns 202D in the group are separated from each other in both the first direction X and the second direction Y. The patterns 202D in the other group are separated from each other in both the first direction X and the second direction Y.

The shape of the reflection body 200D according to Embodiment 4 is not limited to the shape shown in Fig. 9. For example, the plurality of patterns 202D may be arranged in a rectangular lattice shape or may be arranged in a regular triangular lattice shape.

Also in Embodiment 4, the drive state of the movable reflection body 110 swinging around the first rotation axis 112 can be easily distinguished, as compared with a case where the reflection body 200D is provided at only one place on one side of the first direction X with respect to the second center line CY, in the same manner as in Embodiment 1. Further, the drive state of the movable reflection body 110 swinging around the second rotation axis 114 can be easily distinguished, as compared with a case where the reflection body 200D is provided at only one place on one side of the second direction Y with respect to the first center line CX.

In addition, also in Embodiment 4, the drive state of the swing of the movable reflection body 110 around the first rotation axis 112 can be distinguished over a wide range in the second direction Y of the scanning range SA, as compared with a case where the patterns 202D are present only in a portion of the second direction Y of the scanning range SA, in the same manner as in Embodiment 1. Further, the drive state of the swing of the movable reflection body 110 around the second rotation axis 114 can be distinguished over a wide range in the first direction X of the scanning range SA, as compared to a case where the patterns 202D are present only in a portion of the first direction X of the scanning range SA.

The embodiments of the present invention have been described above with reference to the drawings, but these are exemplary of the present invention and various configurations other than an embodiment can also be adopted.

### REFERENCE SIGNS LIST

10A sensor device
100 scanning unit
110 movable reflection body
112 first rotation axis
114 second rotation axis
200A reflection body
200B reflection body
200C reflection body
200D reflection body
202A first pattern
202B first pattern
202C first pattern
202D pattern
204A second pattern
204C second pattern
300 computer
400 casing
CX first center line
CY second center line
D1 first drive state
D2 second drive state
D3 third drive state
SA scanning range
X first direction
Y second direction
Z third direction

## Claims

1. A sensor device comprising:
a scanning unit; and
a reflection body that reflects at least a portion of beams irradiated with which a scanning range of the scanning unit is irradiated,
wherein at least a portion of the reflection body is positioned at a plurality of places shifted from each other in a predetermined direction on one side in the predetermined direction with respect to a center of the scanning range.

2. The sensor device according to Claim 1,
wherein at least the one portion of the reflection body has at least one of a pattern extending in a direction different from the predetermined direction and a pattern separated from each other in a direction different from the predetermined direction.

3. The sensor device according to Claim 1 or 2,
wherein at least another portion of the reflection body is positioned at a plurality of places shifted from each other in a direction different from the predetermined direction on one side in the direction different from the predetermined direction with respect to the center of the scanning range.

4. The sensor device according to Claim 3,
wherein at least the other portion of the reflection body has at least one of a pattern extending in the predetermined direction and a pattern separated from each other in the predetermined direction.

5. The sensor device according to any one of Claims 1 to 4, further comprising:
a translucent base material over which the reflection body is provided.

6. The sensor device according to any one of Claims 1 to 5,
wherein the reflection body is a heating element.
